Europäisches Patentamt

(19) European Patent Office

Office européen des brevets

(11) Publication number: **0 242 056**
**A2**

(12) **EUROPEAN PATENT APPLICATION**

(21) Application number: **87302238.8**

(22) Date of filing: **16.03.87**

(51) Int. Cl.⁴: **A23G 9/02**

(30) ˙Priority: **14.03.86 IL 78146**

(43) Date of publication of application:
**21.10.87 Bulletin 87/43**

(84) Designated Contracting States:
**AT BE CH DE ES FR GB GR IT LI LU NL SE**

(71) Applicant: **BEN-GURION UNIVERSITY OF THE NEGEV RESEARCH AND DEVELOPMENT AUTHORITY**
**P.O. Box 1025**
**Beer-Sheva(IL)**

(72) Inventor: **Devshony, Shlomo**
**21 Barack Street**
**Beer Sheva(IL)**

(74) Representative: **Whalley, Kevin et al**
**MARKS & CLERK 57/60 Lincoln's Inn Fields**
**London WC2A 3LS(GB)**

(54) **Powdered compositions for the manufacture of soft ice-cream and of milk product drinks.**

㊼ The invention provides a powdered composition that upon mixing with milk or water will produce a tart dairy drink or upon mixing with milk in a soft ice cream machine forms a soft ice cream without the presence of gelatine therein, the composition comprising about 1 to about 15% of an edible acid, about 0 to about 6% of a pretreated starch, about 0 to 10% of a dried cultured milk powder, about 0.3 - 90% sweeteners, about 0 to 7% colors and flavors, about 0 to 50% milk powder and a mixture of at least two gums selected from guar gum, carob gum and xanthan gum, each of said individual gums being present in said mixture in an amount from about 0.3 to 4% and the total amount of said mixture of gums being from about 2.3% to 8% by wt of the powdered composition.

EP 0 242 056 A2

## POWDERED COMPOSITIONS FOR THE MANUFACTURE OF SOFT ICE-CREAM AND OF MILK PRODUCT DRINKS

The present invention relates to powdered compositions for the manufacture of tart milk product drinks and machine produced soft ice-creams.

More particularly the present invention relates to powdered compositions which upon mixing with water or with milk, depending on the proportions of the ingredients used, instantly produce a low calory, flavored, soft, ice cream when processed with a soft ice-cream machine or a flavored, light (soft) milk drink, said compositions being kosher according to Jewish Dietary Laws.

These soft, flavored products have a smooth delicate creamy consistency as would be expected of high quality ice-creams and naturally produced cultured milk products.

The powdered composition, when kept dry can be stored for many months at ambient temperatures, maintaining its full aroma, flavor and general texture upon mixing with milk or water.

In order to reduce the calory content of the products, part or all of the sweeteners to be included in the powder, can be other than the usual carbohydrates (sugars). Still less calories can be arrived at by reduction of butterfat content by using skimmed milk in the powder composition and skimmed liquid milk in the powder-liquid mixture. However, if sweetening carbohydrates are reduced the content of stabilizers must be increased to maintain a good texture of the ice-creams. The proper balance of ingredients is presented later on in the example formulas for the variously flavored ice-creams and milk drinks.

This invention emphasizes, and is essentially intended for use in the production of ice cream powder compositions unknown to-day to be used in ice-cream production.

Since, however, variations of this powder compositon are also unique for use in production of various soft milk drinks, a comparison of the present powder composition for production of light (soft) milk drinks which may appear similar to other powder compositions, specifically intended for yoghurt and yoghurt flavored drinks, will immediately reveal the different much wider applicable and innovative principle involved in the present powder compositions.

In most previous attempts to produce cultured or imitation cultured milk drinks, specifically yoghurt drink in powder form, either a dry bacterial, enzymatic or chemical acidogen was employed to acidify, comparatively slowly, the milk in order to coagulate it, and together with various gums, stabilizers and emulsifiers to set it homogeneously.

In later attempts to produce powdered compositions combinable with water or milk to produce immitations of cultured milk beverages, edible acids introduced directly into the powder resulted in the precipitation of the milk proteins in lumps and uneven clots on mixing the powder with milk.

To eliminate these undesirable results more recently a high percentage, e.g. up to 20% and more of the powder composition of various thickeners/stabilizers and emulsifiers, such as modified proteins, pretreated starches, hydrocolloid gums, etc. were included in the powder. Some of these interact with the casein in the milk, producing a soluble complex and significantly preventing the coagulation of the milk. The gelling and setting of the resulting beverages were mainly affected by the emulsifying agents, the gelatines and the gums, however this was achieved at the cost of losing the specific delicate smooth and creamy taste associated with cultured milk products. Also, the gelatines obtained from unkown animal sources and used in many of the prior art patents are considered un-Kosher, and therefor unsuitable for use in the present invention.

In U.S. Patent 3,868,465 there is described a cold water soluble. heat reversible quick setting gelatine with polyglucose along with other ingredients of a gelatine type composition. This composition is un-Kosher.

U.S. Patent 3,899,598 refers to a method for producing fruit flavored gelatine dessert compositions containing adipic and fumeric acids and which are fortified with vitamins. In this composition, again, gelatine is included in the powder, but in addition to that, the acidulent is limited to adipic acid and fumeric acid only, whereas in the present invention, as described hereinafter, almost any edible acid such as citric, tartaric, acetic, malic, lactic, fumaric, ascorbic, etc. can be used, although citric acid is preferred.

The method described in U.S. patent 3,955,009 relates to a dry dessert mix, more particularly, it is concerned with an acidified dry dessert mix which can be stored as a powder and quickly reconstituted by admixing with milk. Still more particularly the invention is directed to an acidified dry dessert mix, which, when combined with milk is ready to serve in five minutes as a tangy instant pudding or yoghurt-like product.

The powder composition of said patent however contains up to 16% thickeners/stabilizers, so that the milk beverage obtained from it when mixed with milk, lacks the specific delicate, creamy taste associated with cultured milk products.

Another method described in U.S. Patent 4,264,638 relates to a dry beverage mix composition for use in preparing a low pH milk based beverage comprising a readily soluble substrate with carbomethyl cellulose applied to it, and an edible acid in an amount effective to bring th pH of the beverage to below about 5. In this particular method the hydrocolloid gum is specifically and only carbomethylcellulose. This, both interacts with the casein to prevent coagulation and gives the beverage viscosity. Thus not only is this composition specifically limited to the use of carbomethylcellulose in order to effect the viscosity, but, by almost completely preventing any coagulation of the milk proteins, its taste and consistency are not those expected from cultured milk products.

In US Patent 3,917,875, there is described a powdered dessert composition suitable for mixing with milk to obtain an acidic desert consisting essentially of 5.0 to 20.0 percent of a cold water-soluble, gelatine, 0.2 to 5.0 percent of a stabilizer, 5.0 to 25.0% of a pregelatinized starch, 2.0 to 7.0 percent of a food acid, 40.0 to 75.0 percent of a sweetening agent, from 0.0 to 25.0 percent yoghurt powder, from 0.0 to 10.0 percent of an emulsifier and from 0.0 to an effective amount of color and flavoring ingredients, all percentage being by weight of the powdered dessert composition, which patent does not rely on dry yoghurt powder culture and instead uses a natural acid to achieve the acidifying effect.

It has been found however, that the direct introduction of an acid in powder form does not produce a homogeneous gradual development of an acidic solution which is essential to the delicate texture associated with natural yoghurt and sour milk products and that to counteract this effect the gelling and stabilizing agents must be raised to 20% or more of the weight of the powder composition as described in the application. This high content however has adverse effect on the flavor of the product.

Furthermore the gelling agent is gelatine and is therefore un-Kosher.

In U.S. Patent 4,289,788 there is described an instant powdered yoghurt composition containing Lactobacillus culture, deactivated yoghurt powder, a gelling agent, a hydrocolloid gum and a food acidulent. A preferred gelling agent, a hydrocolloid gum and acidulent, is gelatine, locust bean gum and a mixture of acid whey and citric acid respectively.

However, in addition to the gelatine which is un-Kosher, the powder composition described must first be dissolved in boiling water and only then can the cold water and/or cold milk be added. Even then the gelling of the product requires several hours, as described in the patent itself.

In U.S. Patent 4,530,850 is described a powdered composition that upon mixing with milk forms a non-gelled acidified milk product drink, the composition comprising 1 to 9% of an edible acid, about 0.5 to 1.9% of an instant cold water soluble gelatine, about 1 to about 10% of an edible natural polysaccharide gum, about 20 to about 90% sweeting agents and 0.0 to an effective amount of flavoring and coloring agents, and the above composition with the addition of 5% to 60% of casein protein source upon mixing with water forms a non gelled acidified milk product drink without curdling of the casein. The ratio of gum to gelatine in the powdered compostion being 2:1 and 10:1 to assure the formation of a non-gelled liquid milk product.

This composition however is also not kosher because of the gelatine therein.

In contradistinction to said prior art patents the present invention provides a kosher powdered composition without gelatine or am emulsifier, that on mixing with milk or with water will produce a stable, tarty, low calory milk drink and more so, on processing in an ice cream machine will produce a stable soft machine ice cream of low calory content. These products will remain stable without separating nor showing syneresis at least for 5-6 days in the refrigerator. The products have the attributes associated with good cultured milk products; a delicate creamy taste, the proper feel and smooth texture together with the product consistency of cultured milk drinks and particularly soft ice cream.

Thus according to the present invention there is now provided a powdered composition that upon mixing with milk or water will produce a tart dairy drink or upon mixing with milk in a soft ice cream machine forms a soft ice cream without the presence of gelatine therein said composition comprising about 1 to about 8% of an edible acid, about 0 to about 6% of a pretreated starch, about 0 to 10% of a dried cultured milk powder, about 0.3 - 90% sweeteners, about 0 to 7% colors and flavors, about 0 to 50% milk powder and a mixture of at least two gums selected from guar gum, carob gum and xanthan gum, each of said individual gums being present in said mixture in an amount between 0.3 and 4% and the total amount of said mixture of gums being between about 2.3% and 8% by wt of the powdered composition.

As is known xanthan gum, Locust Bean Gum (Carab Gum) and Guar Gum, will each individually produce a gelling or thickening when dissolved. However, to obtain the required consistancy of drink, about 5 - 7% of the individual gum together with a gelatine and or pretreated starch in the powder composition is required. That is, at least 8% thickeners - stabilizers of the dry composition or about 1.0% of the entire liquid drink.

In the prior art such as in U.S. Patent 4,289,788 the possibility of using locust bean gum, guar gum, xanthan gum and mixtures thereof is mentioned, however said patent neither teaches nor suggests that a preferred synergistic effect can be achieved by using the combination of gums presently claimed and in fact said patent teaches away from the present invention by teaching that locust bean gum in combination with gelatine is preferred.

It has thus now been found that the synergistic effect of the mixture of gums used in the present compositions reduces considerably the total amount of thickeners and stabilizers normally used in similar prior art compositions and results in a product of enhanced and more pleasing consistancy.

As will be shown in the comparative examples hereinafter, it has now been found that depending on quality and source of components, about 4.0% by weight of any one of the specific gums mentioned above,by itself in a powdered composition, or 0.36% in the liquid drink will not produce a stable product. A short while after mixing the powder composition with the milk, the product separates into aqueous and coagulated phases.

However, the equivalent percentage by weight of two of the specific gums together, such as a combination of Guar Gum 2.0% and Carab gum 2.0% provide the powdered composition with enough stability so that it will not separate even after several days in storage.

It is believed that this is the first time this phenomenon is utilized as a means of quickly gelling and setting soft ice cream.

It may be that the particular interaction involving relatively low percentages of thickening/stabilizing components and their particular synergistic interaction in the presence of the edible acid and the milk, allows for a partial coagulation of the milk, enough to co-gel with the stabilizers to produce a delicate, creamy flavor like that of cultured milk, and yet stable, very homogeneous and without signs of separation nor syneresis.

The exact composition depends on the specific flavor desired, the type of sweetener used and whether the powder composition is for a milk drink or an ice-cream.

Ice-cream will generally require a lower percentage of the gums.

Thus in one preferred embodiment of the present invention there is provided a powdered composition as defined hereinbefore that upon mixing with milk in a soft ice cream machine forms a soft ice cream wherein the total amount of said mixture of gums is between about 2.3 and 7% by weight of the powdered composition.

An especially preferred composition of this embodiment comprises a powdered composition comprising about

1.5% to 3.0% citric acid
0.0 to 0.5% pretreated starch
0.0 to 35.% milk powder
0.5 to 3.7% guar gum
0.3 to 2.5% carob gum
0.3 to 90.0 sweeteners
0.5 to 4.0% colors and flavors and about
0.0 to 2.0% cultured dried milk.

In another preferred embodiment of the present invention there is provided a powdered composition as hereinbefore defined that upon mixing with milk or water will produce a tart dairy drink wherein the total amount of said mixture of gums is between about 3.5 and 7% by weight of the powdered composition.

An especially preferred composition of this embodiment comprises a powdered composition comprising about

2.0% to 15.0% citric acid
0.0 to 2.0% pretreated starch
0.0 to 50.% milk powder
2.0 to 3.6% guar gum
1.5 to 3.6% carob gum
0.0 to 80.0 sweeteners
0.0 to 4.0% cultured dried milk and about
0.0 to 3.0% colors andd flavors.

Of the above mentioned possible combination of synergistic gums a mixture of carob gum and guar gum is especially preferred because of the longer stability of the final ice cream product. On the other hand while Locust Bean Gum and xanthan Gum have a much stronger synergistic interaction and can be used at slightly elevated temperatures, xanthan Gum in combination with Guar Gum dissolve better and quicker at lower temperatures.

4

The advantage of the above-mentioned properties is that the liquid/powder mixture doesn't require "setting time". Thus milk drinks can be consumed at once and the ice-cream powder/liquid mix can be run immediately through the soft ice-cream machine for processing.

High fat content is a requisite in regular ice cream. It gives it "richness", body and good eating properties. Deficienccy of butterfat in regular ice-creams makes it lack "creaminess" and it has a harsh texture.

In the present products it is preferred to lower the lipid content as mentioned above, in order to produce a low calory product, and yet the product nevertheless has a pleasing taste and texture.

Biological (natural) and/or synthetic flavors and colors can be used in the powder compositions. These include, for example: chocolate, mocca, yoghurt, various cultured milk powders , also: vanilla, nuts, fruits, aromatic flowers and aromatic parts of plants such as cinnamon. Also combinations thereof such as for example: vanilla and chocolate or fruit and nuts or two or more fruits or yoghurt and fruits or leben and flower or yoghurt and cinnamon, etc.

An especially preferred product is a powdered composition suitable for mixing with milk or water to form a non-gelled acidified milk product drink having the taste and vitamin A precursors of natural carrots achieved by incorporating into the dry powdered compositions of the present invention about 10 to about 40% of powdered carrot.

Another preferred product of the present invention is a powdered composition suitable for making a natural yoghurt soft ice cream comprising a composition as defined above having about 0.01 to about 10% spray dried yoghurt incorporated therein.

The relative proportions of the different stabilizers/thickners in the powder composition will determine whether a powder is for a milk drink or for an ice-cream.

Thus, a composition comprising a mixture of about 0.3 to 2% carob gum and about 2.0 to 3.5% guar gum is preferred wherein for powdered compositions intended for producing soft ice-cream a mixture containing at least 0.3 carob gum and 2.0% guar gum is preferred while in powdered compositions for producing tart dairy drinks a mixture containing at least 1% carob gum and 2.5% guar gum is preferred.

The particular stabilizers/thickeners used contribute to the "richness", smoothness, body, creaminess and general texture attributed to ice-creams and milk drinks. Generally, increasing the butterfat content and to some extent the sugar content of the powder composition will result in a lower requirement of the thickners/stabilizers to effect the above attributes to the products.

While the invention will now be described in connection with certain preferred embodiments in the following examples so that aspects thereof may be more fully understood and appreciated, it is not intended to limit the invention to these particular embodiments. On the contrary, it is intended to cover all alternatives, modifications and equivalents as may be included within the scope of the invention as defined by the appended claims. Thus, the following examples which include preferred embodiments will serve to illustrate the practice of this invention, it being understood that the particulars shown are by way of example and for purposes of illustrative discussion of preferred embodiments of the present invention only and are presented in the cause of providing what is believed to be the most useful and readily understood description of the principles and conceptual aspects of the invention.

Comparative Example A - Apricot Milk Drink

## Comparative Example A — Apricot Milk Drink

| | Formulation A1 | | Formulation A2 | |
|---|---|---|---|---|
| Ingredients | Weight | Percent in Powder | Weight | percent in powder |
| citric acid | 0.70 gr | 6.90 | 0.70 | as in A1 |
| sugar | 9.00 | 88.00 | 9.00 | " |
| apricot flav. | 0.06 | 0.59 | 0.06 | " |
| cream flav. | 0.03 | 0.29 | 0.03 | " |
| coloring | 0.05 | 0.49 | 0.05 | " |
| carob gum | 0.35 | 3.40 | 0.10 | 0.98 |
| guar gum | none | none | 0.25 | 2.45 |

In comparative formulation A1 the product was unstable and within an hour of standing began to separate into aqueous and coagulated phases. In formulation A2, according to the invention, in which carob gum 0.98% and guar gum 2.45% in the dry powder composition were used instead of the same percentage of only one gum, the product remained stable for 5 days in the refrigerator. When the carob gum was completely replaced with Xanthan gum only or guar gum only the same effects were observed as in the case of formulation A1 with Carob gum only.

It will be observed that only about 3.4% to 4.0% of the gums are required to obtain a stable product.

However, to obtain a more creamy taste and feel and an especially smooth texture, without the use of gelatines or emulsifiers, the gum content is preferrably increased to 4.5%-6.5% for most milk/fruit flavored drinks or slightly more for some fruit flavors, but in any case much less then the total thickeners/stabilizers required in other known patented powder compositions.

## Example 1

Soft, machine ice-cream, with synthetic strawberry flavor Formula:

|  | gr |
|---|---|
| Citric acid | 13.50 |
| carob gum | 1.80 |
| guar gum | 15.00 |
| Redisol | 4.50 |
| Skimmed—milk powder | 10.50 |
| sugar | 485.00 |
| color red | 3.80 |
| straw. fla..(dra go Co) | 4.50 |

540 g of the above composition are added to 3.0 Lit. milk and processed in a soft ice-cream machine.

## Example 2

Soft, machine ice-cream, with synthetic lemon flavor Formula:

|  | gr |
|---|---|
| Citric acid | 15.75 |
| carob gum | 3.12 |
| guar gum | 20.25 |
| Redisol | 5.40 |
| sugar | 435.00 |
| color red | 1.20 |
| flavor lemon (gi or iff) | 5.30 |
| fla. cream (i.f.f.) | 1.10 |
| color yellow | 1.20 |

* gi, no. 74912—71 (preferrable)

* iff no. 15.02.1234

540 g of the above composition are added to 3.0 Lit. milk and processed in a soft ice-cream machine.

## Example 3

Soft machine ice-cream with synthetic yoghurt/banana flavor

|                              | gr     |
| ---------------------------- | ------ |
| Citric acid                  | 12.00  |
| carob gum                    | 1.75   |
| guar gum                     | 10.50  |
| Redisol (pretreated starch)  | 2.50   |
| sugar                        | 485.00 |
| color yellow                 | 4.50   |
| Yoghurt flavor (from Pfw)    | 7.50   |
| cultured yoghurt powder      | 3.00   |
| banana flavor (from Firmenish) | 5.25 |

540 g of the powder composition is mixed with 3.00 liter milk and processed in a soft ice-cream machine.

## Example 4

Soft machine ice-cream with natural yoghurt/strawberry flavor

|                          | gr     | %     |
| ------------------------ | ------ | ----- |
| citric acid              | 13.50  | 2.5   |
| guar gum                 | 15.00  | 2.8   |
| carob gum                | 2.80   | 0.5   |
| dried yoghurt powder     | 3.00   | 1.95  |
| dried cultured milk      | 7.50   |       |
| sugar                    | 485.00 | 89.70 |
| dried natural straw-berry powder | 14.00 | 2.5 |

540 g of the above powder composition is mixed with 3.00 liter milk and processed with a soft ice-cream machine.

It can be calculated and noted that in the ice cream powder composition of example 4 only 3.3% of the gums were required to attain the attributes of a very good quality soft machine ice cream, while in the banana/yoghurt ice cream (example 3) the total thickeners stabilizers was only 2.8%.

8

## Example 5

A synthetic flavored apricot milk drink

|                             | gr     |
| --------------------------- | ------ |
| citric acid                 | 2.75   |
| xanthan gum                 | 1.30   |
| carob gum                   | 1.25   |
| sugar                       | 35.00  |
| apricot flavor (givoden's)  | 0.22   |
| cream flavor (I.F.F.)       | 0.05   |
| color-yellow                | 0.20   |
| cult.prod. (yoghurt)        | 1.50   |

21.0 g of the powder composition is mixed with 200.0 ml milk

## Example 6

A natural flavored yoghurt/strawberry milk drink

|                              | gr     |
| ---------------------------- | ------ |
| citric acid                  | 3.30   |
| dried yoghurt powder         | 0.50   |
| dried cultured milk powder   | 0.40   |
| guar gum                     | 1.80   |
| carob gum                    | 1.50   |
| sugar                        | 38.00  |
| dried natural strawberry powder | 3.40 |

21.0 of the powder composition is mixed wwith 200.0 ml of milk.

9

Example 7

A synthetic flavored yoghurt/banana drink

|  | gr | % |
|---|---|---|
| citric acid | 1.75 | 2.10 |
| yoghurt flavor (dragoco's) | 0.75 | 0.90 |
| guar gum | 2.10 | 2.5 |
| carob gum | 2.00 | 2.4 |
| sugar | 35.00 | 42.4 |
| cream flavor (I..F.F.'s) | 0.05 | 1.1 |
| banana flavor (I.F.F.'s) | 0.25 | 1.1 |
| color-yellow | 0.30 | 1.1 |
| dried yoghurt powder | 0.35 | 1.1 |
| dried milk powder | 40.00 | 48.5 |

29.90 g of the powder composition is mixed with 180 ml of water.

Example 8

A synthetic flavored yoghurt/orange drink

|                             | gr    | %    |
|-----------------------------|-------|------|
| citric acid                 | 4.00  | 15.2 |
| guar gum                    | 1.00  | 3.8  |
| xanthan gum                 | 0.7   | 2.7  |
| cream flavor (I.F.F.'s)     | 0.05  | 0.2  |
| saccharine                  | 0.40  | 1.5  |
| sugar                       | 18.00 | 68   |
| orange flavor (givodan's)   | 0.60  | 2.3  |
| color-yellow                | 0.40  | 1.5  |
| yoghurt flavor (I.F.V.'s)   | 0.70  | 2.7  |
| dried yoghurt powder        | 0.40  | 1.5  |

21.0 g of the powder composition is mixed with 200.0 milk.

It will be observed that example 7, "yoghurt/banana drink" contains a total 4.9% of the two gums and example 8 "yoghurt/orange drink", contains 6.6% of the two gums as the only thickeners/stabilizers in the powder composition. This is much less thickeners/stabilizers then the 8.0% to 20% including gelatines and very often emulsifiers that are required in other powder compositions for preparing tarty instant milk drinks.

Example 9

A natural yoghurt carrot drink

|                    |          | %    |
|--------------------|----------|------|
| citric acid        | 0.70 gr  | 5.3  |
| carob gum          | 0.15 gr  | 1.15 |
| guar gum           | 0.70     | 5.3  |
| cream flavor       | 0.05     | 0.4  |
| carrot powder      | 5.00     | 37.8 |
| sugar              | 6.50     | 49.0 |
| Vanilla flavor     | 0.03     | 0.2  |
| cultured milk powder | 0.10   | 0.7  |
| total weight       | 13.23 gr |      |

The above powder composition is mixed with 100 ml milk.

It will be evident to those skilled in the art that the invention is not limited to the details of the foregoing illustrative examples and that the present invention may be embodied in other specific forms without departing from the essential attributes thereof, and it is therefore desired that the present embodiments and examples be considered in all respects as illustrative and not restrictive, reference being made to the appended claims, rather than to the foregoing description, and all changes which come within the meaning and range of equivalency of the claims are therefore intended to be embraced therein.

**Claims**

1. A powdered composition that upon mixing with milk or water will produce a tarty dairy drink or upon mixing with milk in a soft ice cream machine will form a soft ice cream without the presence of gelatine therein, said composition being characterized by comprising about 1 to about 15% of an edible acid, about 0 to about 6% of a pretreated starch, about 0 to 10% of a dried cultured milk powder, about 0.3 - 90% sweetener(s), about 0 to 7% color(s) and flavor(s), about 0 to 50% milk powder and a mixture of at least two gums selected from guar gum, carob gum and xanthan gum, each of said individual gums being present in said mixture in an amount from about 0.3 to 4% and the total amount of said mixture of gums being from about 2.3% to 8% by wt of the powdered composition.

2. A powdered composition as claimed in claim 1, that upon mixing with milk in a soft ice cream machine forms a soft ice cream, characterized in that the total amount of said mixture of gums is from about 2.3 to 7% by weight of the powdered composition.

3. A powdered composition as claimed in claim 2, characterized by comprising about
1.5% to 3.0% citric acid
0.0 to 0.5% pretreated starch
0.0 to 35.% milk powder
0.5 to 3.7% guar gum
0.3 to 2.5% carob gum
0.3 to 90.0 sweetener(s)
0.5 to 4.0% color(s) and flavor(s), and about
0.0 to 2.0% cultured dried milk.

4. A powdered composition as claimed in claim 1, that upon mixing with milk or water will produce a tart dairy drink, characterized in that the total amount of said mixture of gums is from about 3.5 to 7% by weight of the powdered composition.

5. A powdered composition as claimed in claim 4, characterized by comprising about

2.0% to 15.0% citric acid

0.0 to 2.0% pretreated starch

0.0 to 50.% milk powder

2.0 to 3.6% guar gum

1.5 to 3.6% carob gum

0.0 to 80.0 sweetener(s)

0.0 to 4.0% cultured dried milk, and about

0.0 to 3.0% color(s) and flavor(s).

6. A powdered composition as claimed in claim 1, characterized by including a mixture of carob gum and guar gum.

7. A powdered composition as claimed in claim 1, characterized by including a mixture of about 0.3 to 2% carob gum and about 2.0 to 3.5% guar gum.

8. A powdered composition as claimed in claim 1, characterized by further comprising about 10 to about 40% of powdered carrot.

9. A powdered composition as claimed in claim 1, characterized by comprising about 0.01 to about 10% of spray dried yoghurt.